# EUROPÄISCHE PATENTSCHRIFT

(11) **EP 3 242 120 B1**
(45) Veröffentlichungstag und Bekanntmachung des Hinweises auf die Patenterteilung: **07.08.2019**
(21) Anmeldenummer: 17168098.6
(22) Anmeldetag: 26.04.2017
(51) Int. Cl.: G01M 17/007, F21Y 115/10, F21W 131/00, G01M 99/00, F21V 33/00

(54) **KOLLISIONSZIELATTRAPPE**
COLLISION TARGET DUMMY
UNITÉ FACTICE CIBLE DE COLLISION

(30) Priorität: 02.05.2016 DE 102016108138
(43) Veröffentlichungstag der Anmeldung: 08.11.2017
(73) Patentinhaber: Humanetics Austria GmbH, 4020 Linz (AT)
(72) Erfinder: SIMADER, Julian, 4171 St. Peter (AT); WESENAUER, Severin, 4813 Altmünster (AT); MOSER, Andreas, 4060 Leonding (AT); STEFFAN, Hermann, 4020 Linz (AT)
(74) Vertreter: Manitz Finsterwald Patent- und Rechtsanwaltspartnerschaft mbB

(56) Entgegenhaltungen:
- DE-A1-102011 012 542
- DE-A1-102011 115 670
- GB-A- 2 496 442

## Beschreibung

Die vorliegende Erfindung betrifft eine Kollisionszielattrappe, insbesondere zur Verwendung im Rahmen nicht-destruktiver Kollisionsversuche.

Beispielsweise zur Entwicklung und Verbesserung von Sicherheitssystemen, im Rahmen eines Zulassungsverfahrens oder auch lediglich für einen Vergleichstest kann es nützlich sein, die Sicherheit eines Fahrzeugs zu untersuchen, indem unfalltypische Situationen nachgestellt werden, denen das Fahrzeug dann ausgesetzt wird. Da ein Unfall eines Fahrzeug oftmals eine Kollision des Fahrzeugs mit zumindest einem weiteren Objekt umfasst, ist eine solche Kollision typischerweise Teil des Versuchs.

Bei sogenannten Crashtests stehen die jeweilige Kollision und insbesondere deren Auswirkungen auf das Fahrzeug bzw. auf dessen Insassen im Zentrum der Untersuchung. Bei einem Crashtest ist daher typischerweise vorgesehen, dass zumindest das untersuchte Fahrzeug einer realen Kollision ausgesetzt wird und folglich durch die Kollision auch beschädigt wird. Aus diesem Grund kann das Fahrzeug in der Regel anschließend nicht für einen weiteren Crashtest herangezogen werden.

Grundsätzlich ist es daher vorteilhaft, wenn ein Unfall oder auch ein lediglich drohender Unfall auf eine nicht-destruktive Weise nachgestellt werden kann, d.h. insbesondere in einer Weise, durch die das jeweilige Fahrzeug nicht, nur unwesentlich oder zumindest nicht, soweit es die zu untersuchenden Eigenschaften des Fahrzeugs betrifft, beschädigt wird. Dann nämlich kann das Fahrzeug mehrfach im Rahmen solcher nicht-destruktiven Kollisionsversuche genutzt werden. Insbesondere wenn bei einem jeweiligen Kollisionsversuch anders als bei einem Crashtest nicht die Kollision selbst oder deren Auswirkungen, sondern beispielsweise Eigenschaften und das Verhalten des Fahrzeugs im Vorfeld einer drohenden Kollision im Vordergrund stehen, sind nicht-destruktive Kollisionsversuche daher vorteilhaft.

Somit bieten sich nicht-destruktive Kollisionsversuche insbesondere für Untersuchungen von Fahrerassistenzsystemen (Advanced Driver Assistance Systems, ADAS) an, die gerade zur Vermeidung von Kollisionen oder zumindest zur Verringerung der Auswirkungen einer Kollision etwa dadurch beitragen können, dass sie die Stärke einer jeweiligen Kollision abschwächen. Derartige Fahrerassistenzsysteme können beispielsweise Fahrsituationen, z.B. mittels Sensoren und/oder anhand von Fahrparametern des jeweiligen Fahrzeugs, erfassen, im Falle einer drohenden Kollision diese feststellen und gegebenenfalls derart in die Fahrsituation eingreifen, dass die Kollision verhindert oder abgemildert wird. Beispiele für derartige Fahrerassistenzsysteme sind etwa autonome Notbremssysteme und Spurwechselassistenzsysteme.

Das Nachstellen einer unfalltypischen Situation, in der ein jeweiliges Fahrerassistenzsystem ausgelöst werden soll, um dessen Funktion und Nutzen untersuchen zu können, umfasst daher regelmäßig auch die - oft nicht vollständig zu verhindernde - Kollision des jeweiligen Fahrzeugs mit einem Kollisionsziel. Da bei einem solchen Test aber nicht die Kollisionsauswirkungen untersucht werden, braucht die Kollision selbst nicht realitätsgetreu zu sein. Anders als bei einem Crashtest kann daher zur Vermeidung einer Beschädigung des untersuchten Fahrzeugs anstelle eines der nachgestellten Situation entsprechenden realen Objekts, insbesondere etwa eines weiteren Fahrzeug o.ä., als Kollisionsziel eine Kollisionszielattrappe verwendet werden.

Eine solche Kollisionszielattrappe ist im Unterschied zu dem durch sie nachgebildeten Objekt vorteilhafterweise derart ausgebildet, dass sie bei einer Kollision mit dem jeweiligen Fahrzeug weder beschädigt wird, noch ihrerseits das Fahrzeug beschädigt. Dazu ist die Kollisionszielattrappe insbesondere weich und elastisch verformbar ausgebildet und/oder weist ein wesentlich geringeres Gewicht als das nachzubildende Objekt auf. Zugleich aber ist die Kollisionszielattrappe vorzugsweise dem Objekt zumindest insoweit nachgebildet, als sie von einem jeweiligen Fahrerassistenzsystem in entsprechender Weise erfasst wird, wie auch das reale Objekt erfasst würde.

Insbesondere entspricht die Kollisionszielattrappe dem nachzubildenden Objekt oder zumindest einem für den Kollisionsversuch relevanten Teil des Objekts in Bezug auf Größe und Form. Dazu kann die Kollisionszielattrappe beispielsweise eine Kunststoffhülle umfassen, die von einer flexiblen Struktur, z. B. einer, insbesondere aufblasbaren, Schlauchstruktur oder einem Schaumstoffgerüst, getragen wird. Die Kunststoffhülle kann dabei insbesondere mit einer Abbildung des nachzubildenden Objekts bedruckt sein, so dass sie dem Objekt optisch ähnlich ist.

Die Kollisionszielattrappe kann ferner im Hinblick auf ihre Erfassung durch jeweilige Sensoren geeignet angepasst sein. So können beispielsweise verschiedene Bereiche der Oberfläche der Kollisionszielattrappe speziell für eine Reflexion bzw. Absorption von Strahlung, z.B. Radar, ausgebildet, z.B. entsprechend beschichtet, sein, um etwa reflektierende Flächen, z. B. Metallflächen, des nachzubildenden Objekts zu simulieren bzw. gewisse Bereiche der Oberfläche oder des Innenraums der Kollisionszielattrappe auszublenden. Zudem kann die Kollisionszielattrappe mit einem oder mehreren Attributen versehen sein, die von einem Fahrerassistenzsystem bzw. einer vorausschauenden Fahrzeugsensorik als fahrzeugspezifisch erkannt werden können. Beispielsweise können Strukturen nachgebildet sein, die wie Fahrzeugscheinwerfer, Rückleuchten, Bremslichter, Blinker, Stoßstangen, Seitenspiegel, Reifen, Autokennzeichen usw. aussehen, wie in DE 10 2011 012 542 A1 beschrieben wird.

Für ein realistisches Nachstellen einer unfalltypischen Situation ist es typischerweise erforderlich, dass sich die Kollisionszielattrappe wie das jeweilige nachzubildende Objekt fortbewegt, also insbesondere wie ein Fahrzeug fahren kann. Eine fahrbare Kollisionszielattrappe wird beispielsweise in GB 2 496 442 A beschrieben. Ein Antrieb der Kollisionszielattrappe sollte aber durch die auftretenden Kollisionen nicht beschädigt werden und seinerseits nicht zu einer Beschädigung des untersuchten Fahrzeugs führen. Es ist daher vorteilhaft, einen Antrieb der Kollisionszielattrappe so vorzusehen, dass zumindest der Antrieb von einer stattfindenden Kollision nicht umfasst wird.

Ein solcher Antrieb kann beispielsweise dadurch erreicht werden, dass er in einem flachen Attrappenträger vorgesehen ist, von dem die Kollisionszielattrappe getragen wird. Insbesondere liegt die Kollisionszielattrappe dabei auf dem Attrappenträger auf oder ist lediglich lose, d.h. insbesondere durch bei einer Kollision typischerweise auftretende Kräfte lösbar, z.B. mittels Klettverschluss oder durch magnetische Kopplung, an dem Attrappenträger befestigt. Eine Kollision findet dann vorteilhafterweise lediglich zwischen dem jeweiligen zu untersuchenden Fahrzeug und der Kollisionszielattrappe statt, die sich infolgedessen beispielsweise von dem Attrappenträger lösen und weggeschleudert werden kann. Der Attrappenträger hingegen wird dabei vorteilhafterweise nicht getroffen, sondern kann insbesondere von dem Fahrzeug überfahren werden und/oder unter dem Fahrzeug durchrutschen, ohne dadurch Schaden zu nehmen.

Das Nachbilden der Struktur, der Form, der Farbe und der Bewegung eines realen Objektes mittels einer Kollisionszielattrappe kann je nach einem jeweiligen zu untersuchenden Fahrerassistenzsystem möglicherweise nicht ausreichend sein, insbesondere wenn das Fahrerassistenzsystem dazu ausgebildet ist, auch eine optisehe Signalgebung zu berücksichtigen. Die Schwierigkeiten, an einer Kollisionszielattrappe für nicht-destruktive Kollisionsversuche eine optische Signalgebung nachzubilden, ergeben sich dabei im Wesentlichen dadurch, dass die gesamte Kollisionszielattrappe oder zumindest alle einer jeweiligen Kollision ausgesetzten Elemente der Kollisionszielattrappe für eine einfache Wiederverwendbarkeit der Kollisionszielattrappe hinreichend stabil ausgebildet sein müssen, um eine Kollision unbeschadet zu überstehen.

Es ist eine Aufgabe der Erfindung, eine Kollisionszielattrappe bereitzustellen, die besonders variabel und anpassbar zur Nachbildung eines jeweiligen Objektes, insbesondere auch hinsichtlich einer optischen Signalgebung des Objektes, im Rahmen nicht-destruktiver Kollisionsversuche mehrfach verwendbar ist.

Die Aufgabe wird gelöst durch eine Kollisionszielattrappe mit den Merkmalen des Anspruchs 1 und insbesondere dadurch, dass die Kollisionszielattrappe eine Leuchteinrichtung aufweist, die flächig ausgebildet ist und zumindest ein Leuchtmittel und eine Hüllstruktur umfasst, wobei die Hüllstruktur das Leuchtmittel umschließt und dazu ausgebildet ist, bei einer Kollision auf die Leuchteinrichtung einwirkende Kräfte aufzunehmen und/oder zumindest teilweise an dem Leuchtmittel vorbei zu leiten, wobei die Leuchteinrichtung derart flexibel ausgebildet ist, dass durch die Flexibilität Kollisionskräfte aufgenommen werden können und/oder ein Brechen der Leuchteinrichtung infolge einer Kollision verhindern werden kann, wobei sich die Leichteinrichtung verbiegen und anschließend wieder eine ebene oder sonstige Grundstellung einnehmen kann.

Gemäß der Erfindung ist folglich eine Leuchteinrichtung als Bestandteil der Kollisionszielattrappe vorgesehen. Hierdurch wird ermöglicht, dass die Kollisionszielattrappe für eine noch umfassendere Nachbildung eines realen Objekts, wie z.B. eines Personenkraftwagens, eines Lastkraftwagens oder eines sonstigen ein- oder mehrspurigen Fahrzeugs oder eines Anhängers eines solchen Fahrzeugs, optische Signale aussenden kann.

Bei diesen Signalen kann es sich beispielsweise um ein Blinklicht zur Signalisierung eines Spurwechsels oder eines Abbiegens oder um ein Bremslicht zur Signalisierung einer aktiven Verringerung der Fahrgeschwindigkeit handeln. Dazu kann die Leuchteinrichtung eine entsprechende Farbe aufweisen und in entsprechender Lage, insbesondere an einer Außenhülle der Kollisionszielattrappe, angeordnet sein. In einer typischen solchen Lage kann es allerdings dazu kommen, dass die Leuchteinrichtung im Falle einer Kollision unmittelbar beaufschlagt wird.

Die spezielle Ausbildung der Leuchteinrichtung als zumindest ein von einer Hüllstruktur umschlossenes Leuchtmittel dient insbesondere dazu, bei einer solchen Kollision das Leuchtmittel, insbesondere durch mechanische Abschirmung, vor einer Beschädigung zu schützen. Dazu kann die Hüllstruktur so ausgebildet sein, dass sie durch die Kollision verursachte Kräfte aufnehmen kann, so dass die das Leuchtmittel erreichenden Kräfte vorteilhaftweise zumindest auf ein nicht-destruktives Maß reduziert werden können. Ergänzend oder alternativ dazu kann die Hüllstruktur, beispielsweise durch einen entsprechend um das Leuchtmittel herumführenden kontinuierlichen Verlauf, geeignet sein, zumindest einen Teil der Kräfte an dem Leuchtmittel vorbei und insbesondere um das Leuchtmittel herum zu leiten.

Die Fähigkeit der Hüllstruktur, Kräfte aufzunehmen, insbesondere zu absorbieren, kann beispielsweise aus einer, vorzugsweise zumindest auch elastischen, Verformbarkeit der Hüllstruktur resultieren. In diesem Fall kann eine Kollision zu einem Verformen, insbesondere einem Komprimieren, der Hüllstruktur führen. Dadurch ist es möglich, dass zumindest ein Anteil der einwirkenden Stoßkräfte in potentielle Energie umgewandelt oder bevorzugt auch dissipiert wird, so dass er das Leuchtmittel verzögert bzw. überhaupt nicht erreicht. Auf diese Weise können insbesondere Maxima der Krafteinwirkung abgeschwächt werden, so dass das jeweilige Leuchtmittel zumindest gegen übermäßige Krafteinwirkungen sozusagen abgeschirmt ist.

Damit die Hüllstruktur das Leuchtmittel zwar mechanisch schützend abschirmen kann, aber von dem Leuchtmittel erzeugte optische Signale nach außen dringen können, weist die Hüllstruktur vorzugsweise zumindest in Richtung einer gewünschten Signalaussendung einen lichtdurchlässigen Bereich auf. Dieser kann beispielsweise durch eine Aussparung oder Durchbrechung der Hüllstruktur oder auch durch einen transparent ausgebildeten Abschnitt der Hüllstruktur gebildet sein.

Die Leuchteinrichtung ist zumindest im Wesentlichen flächig ausgebildet. Dabei braucht das Leuchtmittel selbst nicht gleichermaßen flächig ausgebildet zu sein. Vielmehr kann es beispielsweise ausreichen, wenn die Hüllstruktur insgesamt eine flache Form aufweist. Innerhalb der Hüllstruktur können dann insbesondere mehrere gegebenenfalls verschiedenartige Leuchtmittel verteilt angeordnet sein, um die Hüllstruktur zumindest an einer Oberseite ihrer flachen Form über ihre gesamte flächige Ausdehnung aufleuchten zu lassen.

Eine solche flächige Ausbildung, beispielsweise in Form eines Blattes mit einer Dicke von wenigen Zentimetern, insbesondere von höchstens etwa 2 cm, vorzugsweise von höchstens etwa 1 cm, ermöglicht eine einfache Anordnung der Leuchteinrichtung, insbesondere an einer Außenhülle der Kollisionszielattrappe, da sie beispielsweise flächig klebend, haftend, mittels Klettverschluss oder mittels eines oder mehrerer, z.B. in die Hüllstruktur der Leuchteinrichtung aufgenommener, insbesondere eingegossener, Magnete befestigt werden kann. Dabei ist die umlaufende Kontur der Leuchteinrichtung nicht auf eine rechteckige Form beschränkt, sondern kann grundsätzlich beliebig geformt sein.

Ferner ist die Leuchteinrichtung flexibel ausgebildet ist. Somit kann die Leuchteinrichtung z.B. auch an einen unebenen Bereich einer Außenhülle der Kollisionszielattrappe einfach angeordnet werden. Hierdurch wird insbesondere ermöglicht, eine Leuchteinrichtung vorzusehen, welche sich um eine Ecke der Kollisionszielattrappe herum erstreckt, so dass ein optisches Signal über einen größeren Richtungsbereich ausgesandt werden kann.

Zudem können durch die Flexibilität der Leuchteinrichtung, die insbesondere auf einer Flexibilität der Hüllstruktur der Leuchteinrichtung basieren kann, Kollisionskräfte aufgenommen werden und/oder ein Brechen der Leuchteinrichtung infolge einer Kollision verhindert werden, da sich die Leuchteinrichtung vorteilhafterweise einfach verbiegen und anschließend bevorzugt wieder eine ebene oder sonstige Grundstellung einnehmen kann.

Gemäß einer bevorzugten Ausführungsform ist das Leuchtmittel in die Hüllstruktur eingegossen. Durch ein solches Eingießen wird auf vergleichsweise einfache Weise ein zumindest im Wesentlichen vollständiges Umschließen des Leuchtmittels mit einer daraus resultierenden zumindest im Wesentlichen richtungsunabhängigen Abschirmung des Leuchtmittels erreicht. Eine hiervon umfasste Ausnahme von einem vollumfänglichen Umschließen kann dabei insofern vorliegen, als Zuleitungen, etwa Kabel oder Drähte, für eine Kontaktierung bzw. Stromversorgung des jeweiligen Leuchtmittels vorgesehen sein können, welche sich von dem Leuchtmittel bis außerhalb der Hüllstruktur erstrecken können.

Wenn das Leuchtmittel in die Hüllstruktur eingegossen ist, ist ein Material der Hüllstruktur vorzugsweise transparent, damit ein von dem Leuchtmittel erzeugtes optisches Signal von der Hüllstruktur nicht blockiert wird. Dabei kann die Hüllstruktur auch eine Farbe aufweisen, um dadurch die Farbe des optischen Signals festzulegen oder zu modifizieren. Beispielsweise kann das Leuchtmittel zur Erzeugung weißen Lichts ausgebildet sein, während die Hüllstruktur transparent ist und eine rote oder gelbe Farbe aufweist, so dass das Licht nach Durchlaufen der Hüllstruktur rot bzw. gelb ist.

Die Hüllstruktur kann ferner dazu ausgebildet sein, von dem Leuchtmittel ausgesandtes Licht nach Art einer Diffusionsfolie zu zerstreuen. Auf diese Weise kann, auch wenn es sich bei dem Leuchtmittel zumindest in Wesentlichen um eine Punktlichtquelle handelt, ein ausgedehnter Bereich der Leuchteinrichtung, bevorzugt zumindest im Wesentlichen homogen, aufleuchten.

Nach einer bevorzugten Ausführungsform umfasst ein Material der Hüllstruktur Silikon. Ein solches Material kann einfach verarbeitet werden und bietet vorteilhafte Eigenschaften beispielsweise hinsichtlich der Flexibilität, mechanischen Stabilität, Transparenz und/oder Verarbeitbarkeit, insbesondere bezüglich eines Eingießens eines oder mehrerer Leuchtmittel in die Hüllstruktur.

Gemäß einer vorteilhaften Ausführungsform umfasst das Leuchtmittel wenigstens eine LED, insbesondere wenigstens eine LED roter Farbe, wenigstens eine LED gelber Farbe und/oder wenigstens eine LED weißer Farbe. Die Verwendung einer LED als Leuchtmittel hat den Vorteil vergleichsweise geringen Stromverbrauchs und geringer Wärmeerzeugung. Zudem eignet sich eine LED aufgrund ihres kompakten Aufbaus besonders für eine Einbettung in eine flache Hüllstruktur und/oder für ein Eingießen. Die geringe Größe trägt ferner dazu bei, dass einwirkende Kräfte gut an der LED vorbei geleitet werden können. Des Weiteren kann eine LED vergleichsweise stark mechanisch beanspruchbar sein, ohne ihre Funktion zu verlieren.

Vorzugsweise umfasst das Leuchtmittel wenigstens ein LED-Band. Ein solches LED-Band wird insbesondere durch einen flachen länglichen Träger gebildet, an dem mehrere entlang seiner Längserstreckung, vorzugsweise regelmäßig, verteilte LEDs angeordnet sind, die bevorzugt derart miteinander gekoppelt sind, dass sie gemeinsam ansteuerbar sind. Die Zusammenfassung mehrerer LEDs auf einem LED-Band kann somit die Fertigung der Leuchteinrichtung vereinfachen. Insbesondere kann die Leuchteinrichtung mehrere, beispielsweise parallel und vorzugsweise äquidistant angeordnete, LED-Bänder umfassen.

Gemäß einer vorteilhaften Ausführungsform umfasst die Leuchteinrichtung wenigstens eine Anschlussvorrichtung für eine Stromversorgung und/oder für eine Ansteuerung der Leuchteinrichtung, wobei die Anschlussvorrichtung zu einer magnetischen Kopplung mit einer komplementären Anschlussvorrichtung ausgebildet ist. Hierzu kann die Anschlussvorrichtung einen Magneten aufweisen. Die komplementäre Anschlussvorrichtung ist dabei gerade insofern komplementär zu der Anschlussvorrichtung, als sie entsprechend passend für die magnetische Kopplung ausgebildet ist, also beispielsweise einen entgegengesetzt gepolt ausgerichteten Magneten umfasst und/oder eine passende Oberflächenform aufweist.

Die komplementäre Anschlussvorrichtung kann beispielsweise Teil einer Energiequelle oder einer Steuereinrichtung für die Kollisionszielattrappe sein.

Die magnetische Kopplung dient insbesondere dazu, die Anschlussvorrichtung der Leuchteinrichtung und die dazu komplementäre Anschlussvorrichtung mechanisch aneinander zu halten. Gegenüber einer rein mechanischen Kopplung etwa durch Einstecken eines Steckers in eine Buchse hat die magnetische Kopplung den Vorteil, dass sie bei Überschreiten eines Schwellenwerts einer auf die magnetische Kopplung wirkenden Kraft ohne Beschädigung lösbar sein kann, wobei der Kraftschwellenwert vergleichsweise niedrig sein, aber scharf definiert sein kann, so dass bei einer Kraft unterhalb des Schwellenwerts eine zuverlässig Kopplung erfolgt.

Ein weiterer Vorteil einer magnetischen Kopplung kann darin bestehen, dass ein Lösen der Anschlussvorrichtung von der komplementären Anschlussvorrichtung - anders als etwa bei einer Kopplung durch rein mechanisches Einstecken - nicht auf ein Ziehen in eine bestimmte Richtung festgelegt ist. Vielmehr kann die magnetische Kopplung beispielsweise auch dadurch gelöst werden, dass die Anschlussvorrichtung gegenüber der komplementären Anschlussvorrichtung gedreht oder weggeschwenkt wird. Derartige ein Drehmoment aufweisende Bewegungen der Anschlussvorrichtung relativ zu der komplementären Anschlussvorrichtung würden bei einer rein mechanischen Kopplung, etwa bei einer Kopplung durch Einstecken, typischerweise zu einer Beschädigung zumindest einer der Anschlussvorrichtungen führen, was durch die magnetische Kopplung vermieden werden kann.

Insbesondere ermöglicht die zu einer magnetischen Kopplung ausgebildete Anschlussvorrichtung der Leuchteinrichtung, die Leuchteinrichtung über die Anschlussvorrichtung von außerhalb der Leuchteinrichtung mit Strom zu versorgen und/oder anzusteuern, ohne dass davon die Gefahr einer Beschädigung der Leuchteinrichtung im Falle einer Kollision ausgeht. Denn wenn die Kollisionszielattrappe durch eine Kollision beispielsweise stark verformt oder weggeschleudert wird, kann dies zu Zugspannungen auf mit der Leuchteinrichtung verbundene Leitungen und somit zu verschiedenartig ausgerichteten Belastungen der Anschlussvorrichtungen führen. In einem solchen Fall kann sich die magnetische Kopplung einfach und ohne Beschädigung der beteiligten Anschlussvorrichtungen oder der Leuchteinrichtung lösen. Ebenso einfach können anschließend für einen nachfolgenden Kollisionsversuch die Anschlussvorrichtungen erneut durch magnetische Kopplung verbunden werden.

Gemäß einer bevorzugten Ausführungsform ist die Leuchteinrichtung zum Aussenden verschiedener Leuchtcharakteristiken ansteuerbar, die sich insbesondere bezüglich einer Pulsfrequenz, eines Pulspausenverhältnisses, einer Dauer, einer Farbe, einer Helligkeit, einer räumlichen Ausdehnung und/oder eines räumlichen Musters unterscheiden. Somit lässt sich eine jeweilige Leuchteinrichtung nicht lediglich binär dazu ansteuern, zu leuchten oder nicht zu leuchten, sondern es können mit derselben Leuchteinrichtung vorzugsweise unterschiedliche Leuchtcharakteristiken erzeugt werden, durch die somit optische Signale unterschiedlichen Inhalts ausgesandt werden können.

Definiert wird eine jeweilige Leuchtcharakteristik insbesondere dadurch, ob die Leuchteinrichtung kontinuierlich oder gepulst aufleuchtet, welche Frequenz die Pulse gegebenenfalls haben und wie sich die Dauer eines Pulses zur Dauer zwischen zwei Pulsen verhält. Auch die Gesamtdauer der Aufleuchtens, durch die auch die Anzahl der Pulse festgelegt sein kann, sowie die Farbe und Helligkeit des ausgesandten Lichts - was auch eine Farb- bzw. Helligkeitsabfolge umfassen kann - können eine Leuchtcharakteristik definieren. Zudem kann die Leuchteinrichtung dazu ausgebildet sein, dass eine variable Fläche aufleuchtet. Ferner kann die Leuchteinrichtung als Anordnung mehrerer verteilt angeordneter einzelner Leuchteinrichtungen ausgebildet sein, die jeweils wie vorstehend beschrieben ausgebildet sein können, sich dabei untereinander aber unterscheiden können. Insbesondere bei einer solchen Anordnung von Leuchteinrichtungen kann die Leuchtcharakteristik auch durch die räumliche Ausdehnung bzw. das räumliche Muster des Aufleuchtens definiert sein.

Die verschiedenen Leuchtcharakteristiken können dabei insbesondere bekannten und gegebenenfalls normierten optischen Signalen entsprechen, die beispielsweise von einem zu untersuchenden Fahrerassistenzsystem erfasst und ausgewertet werden können, damit das Fahrerassistenzsystem gegebenenfalls in geeigneter Weise darauf reagieren kann. Insbesondere komplexe Leuchtcharakteristiken können dabei von mehreren zu einer gemeinsamen Leuchteinrichtung verbundenen Leuchteinrichtungen erzeugt werden.

In diesem Zusammenhang ist es ferner bevorzugt, wenn die Kollisionszielattrappe einem Fahrzeug nachgebildet ist und die Leuchteinrichtung zur Simulation einer, insbesondere äußeren, Fahrzeugbeleuchtung des Fahrzeugs an der Kollisionszielattrappe angeordnet ist. Dabei kann die Leuchteinrichtung insbesondere zur Simulation wenigstens einer Bremsleuchte und/oder wenigstens eines Fahrtrichtungsanzeigers ausgebildet sein. Bei dem Fahrzeug handelt es sich insbesondere um einen Personenkraftwagen, einen Lastkraftwagen oder ein sonstiges ein- oder mehrspuriges Fahrzeug oder einen Anhänger für ein solches Fahrzeug. Die Leuchteinrichtung kann beispielsweise zumindest an einer Rückseite der Kollisionszielattrappe vorgesehen sein und hinsichtlich ihrer räumlichen Anordnung einer typischen Anordnung von Bremsleuchten und/oder Fahrtrichtungsanzeigern nachgebildet sein.

Für eine realistische Simulation der Fahrzeugbeleuchtung entspricht dabei vorzugsweise nicht nur die räumliche Anordnung, sondern insbesondere auch das Leuchtverhalten der Leuchteinrichtung einer realen Fahrzeugbeleuchtung. Mit anderen Worten kann die Leuchteinrichtung beispielsweise dazu angesteuert werden, nach Art von Fahrtrichtungsanzeigern links bzw. recht und/oder - zur Warnung - beidseitig gelb blinkend aufzuleuchten. Andere Teile der Leuchteinrichtung können beispielsweise nach Art einer Bremsleuchte für die Dauer eines aktiven Verringerns der Geschwindigkeit der Kollisionszielattrappe rot aufleuchten.

Gemäß einer vorteilhaften Ausführungsform ist die Leuchteinrichtung zu einer Ansteuerung über ein serielles Bussystem, insbesondere über einen CAN-Bus, etwa nach ISO 11898, und/oder über einen, insbesondere n-leitenden, Metall-Oxid-Halbleiter-Feldeffekttransistor (MOSFET) ausgebildet. Derartige Komponenten kommen typischerweise auch bei realen Fahrzeugen zum Einsatz, so dass sie vorteilhafterweise in ähnlicher Weise auch bei der Kollisionszielattrappe verwendet werden können.

Die eingangs genannte Aufgabe wird ferner gelöst durch eine Vorrichtung zur Durchführung von, insbesondere nicht-destruktiven, Kollisionsversuchen, die eine Kollisionszielattrappe mit einer Leuchteinrichtung umfasst, wobei die Leuchteinrichtung nach einer der vorstehend beschriebenen Ausführungsformen ausgebildet ist. Dabei umfasst die Vorrichtung zudem eine Steuereinrichtung, welche dazu ausgebildet ist, die Leuchteinrichtung zum Aussenden einer einen Fahrzustand der Kollisionszielattrappe oder eines die Kollisionszielattrappe tragenden Attrappenträgers signalisierenden Leuchtcharakteristik anzusteuern.

Durch eine derartige Vorrichtung mit einer entsprechenden Steuereinrichtung ist es somit möglich, jeweils für einen Fahrzustand spezifische Leuchtcharakteristiken auszusenden. Dies ermöglicht eine Verknüpfung des Aussendens einer jeweiligen Leuchtcharakteristik mit dem Fahrzustand. Mit anderen Worten kann aus der Leuchtcharakteristik, die beispielsweise von einem zu untersuchenden Fahrerassistenzsystem erfasst wird, auf einen Fahrzustand der Kollisionszielattrappe oder eines die Kollisionszielattrappe tragenden Attrappenträgers geschlossen werden. Dabei kann das Aussenden einer jeweiligen Leuchtcharakteristik grundsätzlich unabhängig von dem tatsächlichen Fahrzustand der Kollisionszielattrappe oder des Attrappenträgers erfolgen, etwa um einen gewissen Fahrzustand lediglich durch eine entsprechende Leuchtcharakteristik sozusagen vorzutäuschen.

Für ein realistischeres Nachstellen einer Fahrsituation ist das Aussenden einer jeweiligen Leuchtcharakteristik jedoch vorzugsweise abhängig von dem jeweils vorliegenden Fahrzustand. Somit kann ähnlich wie bei einem realen Fahrzeug aus einer ausgesandten jeweiligen Leuchtcharakteristik auf den jeweils vorliegenden Fahrzustand der Kollisionszielattrappe bzw. des Attrappenträgers geschlossen werden. Hierzu kann die Steuereinrichtung dazu ausgebildet sein, den Fahrzustand der Kollisionszielattrappe oder des Attrappenträgers zu erfassen und die Leuchteinrichtung zum Aussenden einer dem erfassten Fahrzustand zugeordneten Leuchtcharakteristik anzusteuern, um den Fahrzustand zu signalisieren. Das Erfassen des jeweiligen Fahrzustandes kann dabei auf verschiedene Weise erfolgen.

Gemäß einer vorteilhaften Weiterbildung ist die Steuereinrichtung dazu ausgebildet, Punkten einer vorgegebenen oder vorgebbaren Fahrtrajektorie der Kollisionszielattrappe einen jeweiligen nominellen Fahrzustand zuzuordnen und die Leuchteinrichtung zum Aussenden einer dem jeweiligen nominellen Fahrzustand zugeordneten Leuchtcharakteristik anzusteuern.

Die Trajektorie, d.h. der Verlauf einer jeweiligen Fahrstrecke, kann der Kollisionszielattrappe bzw. dem Attrappenträger fest vorgegeben sein oder wahlweise, insbesondere - im Rahmen der grundsätzlichen Beweglichkeit der Kollisionszielattrappe bzw. des Attrappenträgers und der Leistung einer die Bewegung erzeugenden Antriebsvorrichtung - frei, vorgegeben werden. Vorzugsweise wird die Trajektorie vor einem jeweiligen Kollisionsversuch festgelegt, wobei sie zumindest teilweise auch von dem Eintreten bestimmter Ereignisse oder Zustände während des Versuchsablaufs abhängig sein kann. Grundsätzlich kommt ferner auch eine Fernsteuerung des Attrappenträgers sozusagen live während der Durchführung des Kollisionsversuchs in Betracht. In Hinblick auf definierte und reproduzierbare Versuchsbedingungen ist eine Vorabfestlegung der Trajektorie in der Regel aber vorzuziehen.

Bei der genannten Ausführungsform können dann jeweilige Fahrzustände der Kollisionszielattrappe bzw. des Attrappenträgers anhand der vorgegebenen oder vorgebbaren Trajektorie bestimmt werden, indem Punkten der Trajektorie kontinuierlich oder in diskreten Abständen ein jeweiliger nomineller Fahrzustand zugeordnet wird. Beispielsweise kann an der Trajektorie eine Richtungsänderung festgestellt und Punkten eines Bereichs der Trajektorie, der diese Richtungsänderung umfasst, ein Abbiegezustand zugeordnet werden, der dann zu der Aussendung eines Blinkens nach Art eines Fahrtrichtungsanzeigers führen kann. Einer an der Trajektorie festgestellten aktiven Verringerung der Geschwindigkeit kann in ähnlicher Weise ein Bremszustand zugeordnet werden, der zur Aussendung einer einem Aufleuchten von Bremsleuchten entsprechenden Leuchtcharakteristik führen kann.

Je nach Stärke des Bremsens können dabei unterschiedliche Bremszustände, z.B. normale Bremsung oder Notbremsung, unterschieden und durch unterschiedliche Leuchtcharakteristiken nach Art eines adaptiven Bremslichts signalisiert werden. Wird anhand der Trajektorie ein starkes Bremsen bis hin zum vollständigen oder nahezu vollständigen Stillstand erkannt, kann Punkten eines an das Bremsen anschließenden Bereichs der Trajektorie beispielsweise ein Warnzustand zugeordnet werden, der insbesondere durch beidseitiges Blinken gelber Leuchteinrichtungen signalisiert werden kann. Sonstigen Bereichen der Trajektorie kann schließlich ein Normalzustand zugeordnet werden, in dem die Leuchteinrichtung nicht oder gemäß einer Normalleuchtcharakteristik leuchtet, die z.B. einem Standlicht oder Abblendlicht eines Fahrzeugs entsprechen kann.

Alternativ oder ergänzend zu einem Erfassen eines jeweiligen Fahrzustands durch Zuordnung jeweiliger nomineller Fahrzustände zu einer Trajektorie kann gemäß einer weitere Ausführungsform vorgesehen sein, dass die Steuereinrichtung dazu ausgebildet ist, aus empfangenen Fahrparametern der Kollisionszielattrappe oder des Attrappenträgers einen jeweiligen tatsächlichen Fahrzustand abzuleiten und die Leuchteinrichtung zum Aussenden einer dem jeweiligen tatsächlichen Fahrzustand zugeordneten Leuchtcharakteristik anzusteuern.

Die Fahrparameter kann die Steuereinrichtung beispielsweise von einer Antriebsvorrichtung der Kollisionszielattrappe oder des Attrappenträgers und/oder von einem oder mehreren Sensoren zum Erfassen spezifischer Fahrparameter empfangen. Durch derartige Sensoren kann insbesondere eine Position, eine Geschwindigkeit, eine Beschleunigung, eine Richtung, eine Richtungsänderung und/oder eine Ausrichtung der Kollisionszielattrappe erfasst werden. Anhand der empfangenen Fahrparameter kann dann ein tatsächlicher Fahrzustand der Kollisionszielattrappe bzw. des Attrappenträgers abgeleitet werden. Dieser tatsächliche Fahrzustand kann dabei von einem nominellen Fahrzustand abweichen, etwa wenn die vorgegebene oder vorgebbare Trajektorie aufgrund von Toleranzen oder eines Fehlers nicht exakt nachvollzogen wird.

Ähnlich wie dem jeweiligen nominellen Fahrzustand kann einem jeweiligen tatsächlichen Fahrzustand eine Leuchtcharakteristik zugeordnet werden, die auszusenden die Leuchteinrichtung dann von der Steuereinrichtung angesteuert werden kann. Dabei sind die für die nominellen Fahrzustände genannten Beispiele auf die tatsächlichen Fahrzustände entsprechend übertragbar.

Somit kann eine jeweilige Leuchteinrichtung, die auch als eine Anordnung mehrerer einzelner Leuchteinrichtungen beschriebener Art gebildet sein kann, vorteilhafterweise zum Aussenden von Leuchtcharakteristiken angesteuert werden, die einem Fahrverlauf der Kollisionszielattrappe entsprechen. Welche Leuchtcharakteristik welchem Fahrzustand zugeordnet wird, kann vorgegeben oder vorgebbar sein und vorzugsweise softwarebasiert definiert sein bzw. werden. Grundsätzlich kann es aber auch möglich sein, die Leuchteinrichtung bzw. die Leuchteinrichtungen völlig frei, insbesondere wiederum softwarebasiert, zum Aussenden verschiedener möglicher Leuchtcharakteristiken anzusteuern. Vorzugsweise erfolgt die Festlegung jeweilig auszusendender Leuchtcharakteristiken über dieselbe Software oder dieselbe sonstige Eingabevorrichtung, mit der auch die Festlegung der Trajektorie der Kollisionszielattrappe oder des Attrappenträgers erfolgt.

Gemäß einer weiteren Ausführungsform umfasst die Vorrichtung einen fahrbaren Attrappenträger, an dem die Kollisionszielattrappe befestigt ist, wobei die Steuereinrichtung zumindest teilweise an dem Attrappenträger vorgesehen ist. Der Attrappenträger kann dabei insbesondere robust und derart ausgebildet sein, dass er, ohne beschädigt zu werden, überfahren werden kann. Dazu ist der Attrappenträger insbesondere flach und zur Anordnung der Kollisionszielattrappe an seiner Oberseite ausgebildet. Dadurch, dass die Steuereinrichtung zumindest teilweise an dem Attrappenträger, insbesondere innerhalb des Attrappenträgers, vorgesehen ist, kann zumindest der an dem Attrappenträger vorgesehene Teil der Steuereinrichtung vor einer Beschädigung durch eine Kollision geschützt sein. Zur Ansteuerung der Leuchteinrichtung kann die Steuereinrichtung mit dieser insbesondere über die genannte Anschlussvorrichtung verbunden sein.

Die Erfindung wird nachfolgend lediglich beispielhaft unter Bezugnahme auf die Figuren näher erläutert.
- Fig. 1: zeigt eine Ausführungsform einer Kollisionszielattrappe in schematischer perspektivischer Darstellung.
- Fig. 2: zeigt eine Leuchteinrichtung einer Kollisionszielattrappe in schematischer Darstellung.

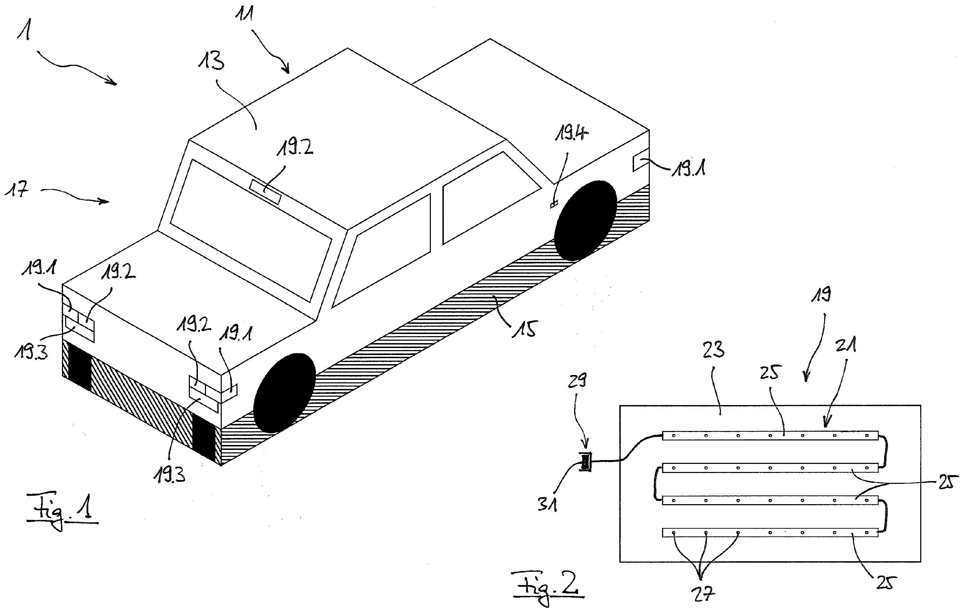

In Fig. 1 ist eine Vorrichtung 1 zur Durchführung nicht-destruktiver Kollisionsversuche gezeigt, die eine Kollisionszielattrappe 11 sowie eine Leuchteinrichtung 17 umfasst.

Die Kollisionszielattrappe 11 ist einem Fahrzeug, im dargestellten Beispiel einem Personenkraftwagen, nachgebildet. Dazu weist die Kollisionszielattrappe 11 eine Außenhülle 13 aus Kunststoff auf, die innenseitig von einem weichen Gerüst, das eine aufblasbare Schlauchstruktur umfasst, getragen wird. Dadurch ist die Kollisionszielattrappe 11, insbesondere elastisch, verformbar.

Die Kollisionszielattrappe 13 entspricht hinsichtlich ihrer Form und Ausmaße zumindest grob dem nachzubildenden Personenkraftwagen. Zudem ist die Außenhülle 13, welche die Kollisionszielattrappe 13 im Wesentlichen zu allen Seiten mit Ausnahme der Unterseite begrenzt, derart bedruckt, dass auch feinere Strukturen des Fahrzeugs nachgebildet sind und die Kollisionszielattrappe 11 dem Personenkraftwagen auch farblich entspricht.

Um von Sensoren eines Fahrerassistenzsystems eines Fahrzeugs wie ein realer Personenkraftwagen, insbesondere beispielsweise mittels Radar, erfasst zu werden, ist die Außenhülle 13 dazu ausgebildet, eine entsprechende Strahlung, insbesondere Radar, zumindest in solchen Bereichen zu reflektieren, in denen auch ein Personenkraftwagen die Strahlung reflektieren würde. Ein unterer Bereich der Außenhülle 13, der einem Freiraum unterhalb des nachgebildeten Personenkraftwagens entspricht, ist als gestreift dargestellter Absorptionsbereich 15 dazu ausgebildet, die Strahlung zu absorbieren, um einerseits von Sensoren als ein Freiraum erfasst zu werden und andererseits das Innere der Kollisionszielattrappe 11, insbesondere einen die Kollisionszielattrappe 11 tragenden und fahrenden Attrappenträger (nicht zu erkennen), vor einer Erfassung durch jeweilige Sensoren abzuschirmen.

Mittels des Attrappenträgers, der eine Antriebseinheit umfasst, kann die Kollisionszielattrappe 11 gemäß einer vorgegebenen oder einer vorgebbaren Trajektorie über einen Untergrund fahren bzw. gefahren werden. Um von einem mit der Kollisionszielattrappe 11 kollidierenden Fahrzeug ohne Beschädigung des Fahrzeugs oder des Attrappenträgers überfahren werden zu können, ist der Attrappenträger flach und entsprechend robust ausgebildet. Um von dem Attrappenträger getragen zu werden, kann die Kollisionszielattrappe 11 auf eine Oberseite des Attrappenträgers aufgesetzt und, insbesondere lösbar, daran befestigt werden. Der Attrappenträger ist dabei insbesondere dazu ausgebildet, die Kollisionszielattrappe 11 in einer der Fahrt eines realen Fahrzeugs, beispielsweise hinsichtlich Geschwindigkeit und Dynamik, entsprechenden Weise zu bewegen.

Für eine noch realistischere Nachbildung eines realen Fahrzeugs weist die Kollisionszielattrappe 11 die Leuchteinrichtung 17 auf, die als eine Anordnung einzelner Leuchteinrichtungen 19 ausgebildet ist. Jede der Leuchteinrichtungen 19 umfasst ein Leuchtmittel 21 sowie eine Hüllstruktur 23, welche das Leuchtmittel 21 umschließt.

Bei dem Leuchtmittel 21 handelt es sich im dargestellten Beispiel um LED-Bänder 25, die streifenförmig ausgebildet sind und jeweils mehrere über die Längserstreckung eines LED-Bands 25 verteilt angeordnete LEDs 27 umfassen (vgl. Fig. 2). Die LED-Bänder 25 sind über entsprechende Leitungen miteinander verbunden, so dass die LEDs 27 einer jeweiligen Leuchteinrichtung 19 gemeinsam angesteuert werden können. Im dargestellten Beispiel erfolgt die Verbindung der LED-Bänder 25 seriell, sie kann aber auch zumindest teilweise parallel erfolgen. Grundsätzlich kann eine jeweilige Leuchteinrichtung 19 noch weitere und gegebenenfalls andersartige Leuchtmittel 21 aufweisen.

Die das Leuchtmittel 21 umschließende Hüllstruktur 23 ist dazu ausgebildet, bei einer Kollision auf die jeweilige Leuchteinrichtung 19 einwirkende Kräfte aufzunehmen und zumindest teilweise an dem Leuchtmittel 21 vorbei zu leiten. Dazu sind die LED-Bänder 25 in die Hüllstruktur 23, die als Material Silikon umfasst, derart eingegossen, dass eine jeweilige Leuchteinrichtung 19 eine rechteckige blattartige Form geringer Dicke von etwa 1 cm aufweist, innerhalb deren die LED-Bänder 25 parallel und äquidistant zueinander angeordnet sind.

Die Hüllstruktur 23 ist zumindest an einer von der Außenhülle 13 der Kollisionszielattrappe 11 weg weisenden Seite zumindest im Wesentlichen transparent, so dass von den LEDs 27 der LED-Bänder 25 erzeugtes Licht durch die Hüllstruktur 23 hindurchtreten und von außen wahrgenommen werden kann. Dabei ist die Hüllstruktur 23 nach Art einer Diffusionsfolie dazu ausgebildet, das hindurchtretende Licht zu zerstreuen, so dass eine einzelne Leuchteinrichtung 19 zumindest im Wesentlichen als eine flächige Lichtquelle erscheint. Dabei können die einzelnen LEDs 27 jedoch grundsätzlich noch erkennbar sein. Zudem weist die Hüllstruktur 23 eine jeweilige Farbe auf, so dass das von den LEDs 27 erzeugte, zunächst weiße Licht nach Hindurchtreten durch einen transparenten Bereich der Hüllstruktur 23 diese Farbe aufweist.

Die Leuchteinrichtungen 19 sind an der Außenhülle 13 der Kollisionszielattrappe 11 durch Aufkleben, mittels Klettverschluss oder durch magnetische Kopplung an Stellen befestigt, die für Elemente einer äußeren Fahrzeugbeleuchtung typisch sind. Dabei können die Leuchteinrichtungen 19 zumindest im Wesentlichen flach angeordnet sein. Die Leuchteinrichtungen 19 sind jedoch aufgrund der Flexibilität der LED-Bänder 25 sowie der Silikon-Hüllstruktur 23 ihrerseits ebenfalls flexibel, so dass sie auch in unebenen Bereichen der Außenhülle 13 angebracht werden können, da sie sich an die Unebenheit der Außenhülle 13 anpassen können. Ein Beispiel hierfür sind die an Ecken der Außenhülle 13 angebrachten Leuchteinrichtungen 19.1, die in einem Winkel von etwa 90° geknickt oder gebogen an der Außenhülle 13 befestigt sind.

Die Stromversorgung sowie Ansteuerung der Leuchteinrichtungen 19 erfolgt jeweils über eine in Fig. 2 rein schematisch dargestellte Anschlussvorrichtung 29, die zu einer magnetischen Kopplung mit einer komplementären Anschlussvorrichtung ausgebildet ist. Dazu ist die Anschlussvorrichtung 29 nach Art eines Magnetsteckers ausgebildet und umfasst einen Magneten 31, welcher dazu dient, im Zusammenwirken mit einem entsprechenden Magneten der komplementären Anschlussvorrichtung die Anschlussvorrichtung 29 und die komplementäre Anschlussvorrichtung aneinander zu halten, so dass hierdurch auch eine elektrische Verbindung der beiden Anschlussvorrichtungen erfolgt. Zugleich ist die magnetische Kopplung bei einer unspezifischen Krafteinwirkung, die insbesondere auch Drehmomente umfassen kann, leicht lösbar, ohne dass die Anschlussvorrichtungen dabei beschädigt würden.

Zur Ansteuerung und Stromversorgung der gesamten Leuchteinrichtung 17 - die als Anordnung einzelner Leuchteinrichtungen 19 gebildet ist - umfasst die Vorrichtung 1 ferner eine Steuereinrichtung, die unterhalb der Kollisionszielattrappe in dem Attrappenträger angeordnet und in den Figuren daher nicht zu erkennen ist. die Steuereinrichtung ist dabei über die jeweilige Anschlussvorrichtung 29 mit den Leuchteinrichtungen 19 verbunden. Grundsätzlich ist es auch denkbar, dass die einzelnen Leuchteinrichtungen 19 zunächst untereinander verbunden sind und dass die Anordnung 17 der einzelnen Leuchteinrichtungen 19 eine allen einzelnen Leuchteinrichtungen 19 gemeinsame Anschlussvorrichtung 29 aufweist, die zu einer magnetischen Kopplung ausgebildet ist. In diesem Fall kann die Steuereinrichtung dann über diese gemeinsame Anschlussvorrichtung 29 mit der Leuchteinrichtung 17 und somit letztlich auch mit den einzelnen Leuchteinrichtungen 19 verbunden sein.

Im Falle einer Kollision eines Fahrzeugs mit der Kollisionszielattrappe 11 kann die Kollisionszielattrappe 11 verformt, insbesondere gestaucht oder auf andere Weise komprimiert werden. Zudem kann die Kollision dazu führen, dass die Kollisionszielattrappe weggeschleudert und dabei insbesondere von dem Attrappenträger, der sie trägt und von dem Fahrzeug überfahren werden kann, gelöst wird. Dass die Leuchteinrichtung 17 bzw. die einzelnen Leuchteinrichtungen 19 dabei in der Regel nicht beschädigt werden, liegt insbesondere daran, dass die Hüllstruktur 23 die einzelnen Leuchtmittel 21 schützt, dass die einzelnen Leuchteinrichtungen 19 flexibel und somit ihrerseits verformbar ausgebildet sind und dass die Verbindung der Leuchteinrichtungen 19 mit der Steuereinrichtung im Attrappenträger aufgrund der magnetischen Kopplung ähnlich leicht und ohne Beschädigung lösbar ist wie die Befestigung der Kollisionszielattrappe 11 an dem Attrappenträger. Somit kann nach einer Kollision die Kollisionszielattrappe 11 erneut an dem Attrappenträger befestigt und kann die Leuchteinrichtung 17 erneut über die magnetische Kopplung mit der Steuereinrichtung verbunden werden, so dass anschließend ein weiterer Kollisionsversuch durchgeführt werden kann.

Während des Fahrens der Kollisionszielattrappe 11 wird die Leuchteinrichtung 17 durch die Steuereinrichtung zum Aussenden von Leuchtcharakteristiken angesteuert, die einen jeweiligen Fahrzustand der Kollisionszielattrappe 11 bzw. des sie fahrenden Attrappenträgers signalisieren. Insofern entsprechen die ausgesendeten optischen Signale einem Fahrverlauf der Kollisionszielattrappe 11. Insbesondere werden dabei durch gelb leuchtende Leuchteinrichtungen 19.1 in Ecken der Kollisionszielattrappe 11 sowie ebenso gelb leuchtende seitliche Leuchteinrichtungen 19.4 Fahrtrichtungsanzeiger nachgebildet, während durch drei rückseitige rote Leuchteinrichtungen 19.2 Bremsleuchten und durch zwei weitere rückseitige rote Leuchteinrichtungen 19.3 Schlussleuchten nachgebildet werden.

Durch eine solche Anordnung 17 von Leuchteinrichtungen 19 können somit Leuchtcharakteristiken realer Fahrzeuge besonders realistisch simuliert werden.

Insbesondere können dabei komplexe Leuchtcharakteristiken, z.B. nach Art eines sogenannten adaptiven Bremslichts, simuliert werden, die etwa zur Warnung des nachfolgenden Verkehrs im Falle eines starken Bremsens gegebenenfalls bis zum Stillstand des Fahrzeugs, beispielsweise durch helleres Aufleuchten der Bremsleuchten 19.2, zusätzliches Blinken der Bremsleuchten 19.2, zusätzliches bzw. zusätzlich helleres Aufleuchten der Schlussleuchten 19.3 und/oder zusätzliches bzw. anschließendes beidseitiges Blinken der Fahrtrichtungsanzeiger 19.1, 19.4, dienen können.

Insgesamt kann somit das Vorsehen einer oder mehrerer, eine Kollision unbeschadet überstehender Leuchteinrichtungen an einer Kollisionszielattrappe zu einer realistischeren Nachbildung unfalltypischer Situationen im Rahmen nicht-destruktiver Kollisionsversuche beitragen.

### Bezugszeichenliste

- 1: Vorrichtung zur Durchführung von Kollisionsversuchen
- 11: Kollisionszielattrappe
- 13: Außenhülle
- 15: Absorptionsbereich
- 17: Anordnung von Leuchteinrichtungen
- 19: Leuchteinrichtung
- 21: Leuchtmittel
- 23: Hüllstruktur
- 25: LED-Band
- 27: LED
- 29: Anschlussvorrichtung
- 31: Magnet

## Patentansprüche

1. Kollisionszielattrappe (11), insbesondere zur Verwendung im Rahmen nicht-destruktiver Kollisionsversuche, mit einer Leuchteinrichtung (17, 19), **dadurch gekennzeichnet,**
**dass** die Leuchteinrichtung (17, 19) flächig ausgebildet ist und zumindest ein Leuchtmittel (21) und eine Hüllstruktur (23) umfasst,
wobei die Hüllstruktur (23) das Leuchtmittel (21) umschließt und dazu ausgebildet ist, bei einer Kollision auf die Leuchteinrichtung (17, 19) einwirkende Kräfte aufzunehmen und/oder zumindest teilweise an dem Leuchtmittel (21) vorbei zu leiten,
wobei die Leuchteinrichtung (17, 19) derart flexibel ausgebildet ist, dass durch die Flexibilität Kollisionskräfte aufgenommen werden können
und/oder ein Brechen der Leuchteinrichtung (17, 19) infolge einer Kollision verhindern werden kann, wobei sich die Leichteinrichtung (17, 19) verbiegen und anschließend wieder eine ebene oder sonstige Grundstellung einnehmen kann.

2. Kollisionszielattrappe nach Anspruch 1,
**dadurch gekennzeichnet,**
**dass** das Leuchtmittel (21) in die Hüllstruktur (23) eingegossen ist.

3. Kollisionszielattrappe nach zumindest einem der vorstehenden Ansprüche, **dadurch gekennzeichnet,**
**dass** ein Material der Hüllstruktur (23) Silikon umfasst.

4. Kollisionszielattrappe nach zumindest einem der vorstehenden Ansprüche, **dadurch gekennzeichnet,**
**dass** das Leuchtmittel (21) wenigstens eine LED (27), insbesondere wenigstens eine LED (27) roter Farbe, wenigstens eine LED (27) gelber Farbe und/oder wenigstens eine LED (27) weißer Farbe, umfasst,
wobei das Leuchtmittel (21) vorzugweise wenigstens ein LED-Band (25) umfasst.

5. Kollisionszielattrappe nach zumindest einem der vorstehenden Ansprüche, **dadurch gekennzeichnet,**
**dass** die Leuchteinrichtung (17, 19) wenigstens eine Anschlussvorrichtung (29) für eine Stromversorgung und/oder für eine Ansteuerung der Leuchteinrichtung (17, 19) umfasst,
wobei die Anschlussvorrichtung (29) zu einer magnetischen Kopplung mit einer komplementären Anschlussvorrichtung ausgebildet ist.

6. Kollisionszielattrappe nach zumindest einem der vorstehenden Ansprüche, **dadurch gekennzeichnet,**
**dass** die Leuchteinrichtung (17, 19) zum Aussenden verschiedener Leuchtcharakteristiken ansteuerbar ist, die sich insbesondere bezüglich einer Pulsfrequenz, eines Pulspausenverhältnisses, einer Dauer, einer Farbe, einer Helligkeit, einer räumlichen Ausdehnung und/oder eines räumlichen Musters unterscheiden.

7. Kollisionszielattrappe nach zumindest einem der vorstehenden Ansprüche, **dadurch gekennzeichnet,**
**dass** die Kollisionszielattrappe (11) einem Fahrzeug nachgebildet ist und die Leuchteinrichtung (17, 19) zur Simulation einer Fahrzeugbeleuchtung des Fahrzeugs, insbesondere zur Simulation wenigstens einer Bremsleuchte und/oder wenigstens eines Fahrtrichtungsanzeigers, an der Kollisionszielattrappe (11) angeordnet ist.

8. Kollisionszielattrappe nach zumindest einem der vorstehenden Ansprüche, **dadurch gekennzeichnet,**
**dass** die Leuchteinrichtung (17, 19) zu einer Ansteuerung über ein serielles Bussystem und/oder über einen, insbesondere n-leitenden, Metall-Oxid-Halbleiter-Feldeffekttransistor (MOSFET) ausgebildet ist.

9. Vorrichtung (1) zur Durchführung von Kollisionsversuchen, die eine Kollisionszielattrappe (11) mit einer Leuchteinrichtung (17) nach zumindest einem der vorstehenden Ansprüche umfasst,
**dadurch gekennzeichnet,**
**dass** die Vorrichtung (1) eine Steuereinrichtung umfasst, welche dazu ausgebildet ist, die Leuchteinrichtung (17, 19) zum Aussenden einer einen Fahrzustand der Kollisionszielattrappe (11) oder eines die Kollisionszielattrappe (11) tragenden Attrappenträgers signalisierenden Leuchtcharakteristik anzusteuern.

10. Vorrichtung nach Anspruch 9,
**dadurch gekennzeichnet,**
**dass** die Steuereinrichtung dazu ausgebildet ist, Punkten einer vorgegebenen oder vorgebbaren Fahrtrajektorie der Kollisionszielattrappe (11) einen jeweiligen nominellen Fahrzustand zuzuordnen und die Leuchteinrichtung (17, 19) zum Aussenden einer dem jeweiligen nominellen Fahrzustand zugeordneten Leuchtcharakteristik anzusteuern.

11. Vorrichtung nach Anspruch 9 oder 10,
**dadurch gekennzeichnet,**
**dass** die Steuereinrichtung dazu ausgebildet ist, aus empfangenen Fahrparametern der Kollisionszielattrappe (11) oder des Attrappenträgers einen jeweiligen tatsächlichen Fahrzustand abzuleiten und die Leuchteinrichtung (17, 1) zum Aussenden einer dem jeweiligen tatsächlichen Fahrzustand zugeordneten Leuchtcharakteristik anzusteuern.

12. Vorrichtung nach zumindest einem der Ansprüche 9 bis 11,
**dadurch gekennzeichnet,**
**dass** die Vorrichtung (1) einen fahrbaren Attrappenträger umfasst, an dem die Kollisionszielattrappe (11) befestigt ist, wobei die Steuereinrichtung zumindest teilweise an dem Attrappenträger vorgesehen ist.

## Claims

1. A soft collision target (11), in particular for use as part of non-destructive collision tests, having a lamp device (17, 19),
**characterized in that**
the lamp device (17, 19) is formed as areal and comprises at least one illuminant (21) and an enveloping structure (23),
with the enveloping structure (23) surrounding the illuminant (21) and being configured to absorb forces acting on the lamp device (17, 19) on a collision and/or to guide them at least partly past the illuminant (21),
with the lamp device (17, 19) being formed as flexible such that, due to the flexibility, collision forces can be absorbed and/or a breaking of the lamp device (17, 19) as a result of a collision can be prevented, and with the lamp device (17, 19) being able to bend and subsequently adopt a planar or other basic position again.

2. A soft collision target in accordance with claim 1,
**characterized in that**
the illuminant (21) is cast into the enveloping structure (23).

3. A soft collision target in accordance with at least one of the preceding claims,
**characterized in that**
a material of the enveloping structure (23) comprises silicone.

4. A soft collision target in accordance with at least one of the preceding claims,
**characterized in that**
the illuminant (21) comprises at least one LED (27), in particular at least one LED (27) red in color, at least one LED (27) yellow in color and/or at least one LED (27) white in color,
with the illuminant (21) preferably comprising at least one LED strip (25).

5. A soft collision target in accordance with at least one of the preceding claims,
**characterized in that**
the lamp device (17, 19) comprises at least one connection apparatus (29) for a power supply and/or for a control of the lamp device (17, 19),
with the connection apparatus (29) being configured for a magnetic coupling to a complementary connection apparatus.

6. A soft collision target in accordance with at least one of the preceding claims,
**characterized in that**
the lamp device (17, 19) can be controlled to transmit various lighting characteristics which in particular differ with respect to a pulse frequency, a pulse-to-pause ratio, a duration, a color, a brightness, a spatial extent and/or a spatial pattern.

7. A soft collision target in accordance with at least one of the preceding claims,
**characterized in that**
the soft collision target (11) is modeled on a vehicle and the lamp device (17, 19) is arranged at the soft collision target (11) to simulate a vehicle illumination of the vehicle, in particular to simulate at least one brake light and/or at least one direction indicator.

8. A soft collision target in accordance with at least one of the preceding claims,
**characterized in that**
the lamp device (17, 19) is configured for a control via a serial bus system and/or via a metal oxide semiconductor field effect transistor (MOSFET), in particular of an n-type.

9. An apparatus (1) for carrying out collision tests which comprises a soft collision target (11) having a lamp device (17) in accordance with at least one of the preceding claims,
**characterized in that**
the apparatus (1) comprises a control device which is configured to control the lamp device (17, 19) to transmit a lighting characteristic signaling a driving condition of the soft collision target (11) or of a dummy carrier carrying the soft collision target (11).

10. An apparatus in accordance with claim 9,
**characterized in that**
the control device is configured to associate a respective nominal driving condition with points of a predefined or predefinable travel trajectory of the soft collision target (11) and to control the lamp device (17, 19) to transmit a lighting characteristic associated with the respective nominal driving condition.

11. An apparatus in accordance with claim 9 or claim 10,
**characterized in that**
the control device is configured to derive a respective actual driving condition from received driving parameters of the soft collision target (11) or of the dummy carrier and to control the lamp device (17, 19) to transmit a lighting characteristic associated with the respective actual driving condition.

12. An apparatus in accordance with at least one of the claims 9 to 11, **characterized in that**
the apparatus (1) comprises a drivable dummy carrier to which the soft collision target (11) is fastened, with the control device being provided at least partly at the dummy carrier.

## Revendications

1. Unité factice cible de collision (11), en particulier pour une utilisation dans le cadre d'essais de collision non destructifs, comportant un système d'éclairage (17, 19),
**caractérisée en ce que**
le système d'éclairage (17, 19) est réalisée en forme surfacique et comprend au moins un moyen d'éclairage (21) et une structure enveloppe (23), dans laquelle
la structure enveloppe (23) enferme le moyen d'éclairage (21) et est conçue pour, en cas de collision, encaisser les forces agissant sur le système d'éclairage (17, 19) et/ou pour les faire passer au moins partiellement à côté du moyen d'éclairage (21),
le système d'éclairage (17, 19) est réalisée de façon flexible de telle sorte que des forces de collision peuvent être encaissées grâce à la flexibilité et/ou qu'une rupture du système d'éclairage (17, 19) à la suite d'une collision peut être empêchée, le système d'éclairage (17, 19) pouvant fléchir et ensuite reprendre une position initiale plane ou autre.

2. Unité factice cible de collision selon la revendication 1,
**caractérisée en ce que**
le moyen d'éclairage (21) est intégré par coulée dans la structure enveloppe (23).

3. Unité factice cible de collision selon l'une au moins des revendications précédentes,
**caractérisée en ce que**
un matériau de la structure enveloppe (23) contient de la silicone.

4. Unité factice cible de collision selon l'une au moins des revendications précédentes,
**caractérisée en ce que**
le moyen d'éclairage (21) comprend au moins une DEL (27), en particulier au moins une DEL (27) de couleur rouge, au moins une DEL (27) de couleur jaune et/ou au moins une DEL (27) de couleur blanche, le moyen d'éclairage (21) comprenant de préférence au moins une bande à DEL (25).

5. Unité factice cible de collision selon l'une au moins des revendications précédentes,
**caractérisée en ce que**
le système d'éclairage (17, 19) comprend au moins un dispositif de raccordement (29) pour une alimentation électrique et/ou pour un pilotage du système d'éclairage (17, 19),
le dispositif de raccordement (29) étant conçu en vue d'un couplage magnétique avec un dispositif de raccordement complémentaire.

6. Unité factice cible de collision selon l'une au moins des revendications précédentes,
**caractérisée en ce que**
le système d'éclairage (17, 19) est pilotable en vue d'émettre différentes caractéristiques d'éclairage qui se distinguent en particulier de par une fréquence d'impulsions, un rapport d'intervalles entre impulsions, une durée, une couleur, une luminosité, une extension spatiale et/ou de par un motif spatial.

7. Unité factice cible de collision selon l'une au moins des revendications précédentes,
**caractérisée en ce que**
l'unité factice cible de collision (11) est reproduite selon un véhicule et le système d'éclairage (17, 19) est agencé sur l'unité factice cible de collision (11) pour la simulation d'un éclairage du véhicule, en particulier pour la simulation d'au moins un feu de stop et/ou d'au moins un feu indicateur de direction.

8. Unité factice cible de collision selon l'une au moins des revendications précédentes,
**caractérisée en ce que**
le système d'éclairage (17, 19) est réalisé en vue d'un pilotage par l'intermédiaire d'un système de bus série et/ou d'un transistor à effet de champ à structure métal-oxyde semi-conducteur (MOSFET), en particulier d'un transistor de type n.

9. Dispositif (1) pour mettre en oeuvre des essais de collision, comprenant une unité factice cible de collision (11) pourvue d'un système d'éclairage (17), selon l'une au moins des revendications précédentes
**caractérisé en ce que**
le dispositif (1) comprend un moyen de commande qui est réalisé pour piloter le système d'éclairage (17, 19) en vue d'émettre une caractéristique d'éclairage signalant un état de déplacement de l'unité factice cible de collision (11) ou d'un support d'unité factice portant l'unité factice cible de collision (11).

10. Dispositif selon la revendication 9,
**caractérisé en ce que**
le moyen de commande est réalisé pour associer un état de déplacement respectif nominal à des points d'une trajectoire de déplacement prédéterminée ou susceptible d'être prédéterminée de l'unité factice cible de collision (11), et pour piloter le système d'éclairage (17, 19) en vue d'émettre une caractéristique d'éclairage associée à l'état de déplacement respectif nominal.

11. Dispositif selon la revendication 9 ou 10,
**caractérisé en ce que**
le moyen de commande est réalisé pour déduire un état de déplacement respectif réel à partir de paramètres de déplacement reçus de l'unité factice cible de collision (11) ou du support d'unité factice, et pour piloter le système d'éclairage (17, 19) en vue d'émettre une caractéristique d'éclairage associée à l'état de déplacement respectif réel.

12. Dispositif selon l'une au moins des revendications 9 à 11,
**caractérisé en ce que**
le dispositif (1) comprend un support d'unité factice mobile auquel est fixée l'unité factice cible de collision (11), le moyen de commande étant prévu au moins partiellement sur le support d'unité factice.
